# EUROPEAN PATENT APPLICATION

(11) **EP 4 657 813 A1**
(43) Date of publication of application: **03.12.2025**
(21) Application number: 24752880.5
(22) Date of filing: 06.02.2024
(51) Int. Cl.: H04L 41/0895

(54) **VIRTUAL INSTANCE CONFIGURATION METHOD BASED ON PUBLIC CLOUD, AND CLOUD MANAGEMENT PLATFORM**

(30) Priority: 09.02.2023 CN 202310092105; 30.06.2023 CN 202310796903
(71) Applicant: Huawei Cloud Computing Technologies Co., Ltd., Guiyang, Guizhou 550025 (CN)
(72) Inventor: GAO, Zhonghua, Guiyang, Guizhou 550025 (CN); LUO, Shuwei, Guiyang, Guizhou 550025 (CN)
(74) Representative: Thun, Clemens
(86) International application number: PCT/CN2024/076366
(87) International publication number: WO 2024/165025

(57) **Abstract**

This application discloses a public cloud-based virtual instance configuration method and a cloud management platform, to simplify an operation of a tenant, quickly respond to a virtual instance creation requirement and an address management requirement of the tenant, and reduce time costs for the tenant, thereby improving user experience. The method in this application includes: After receiving configuration information that is of a to-be-created virtual instance and that is input by a first tenant, based on the configuration information, the cloud management platform may select a first site from a plurality of sites, select a first physical server from a plurality of physical servers at the first site, create a first virtual instance on the first physical server, and allocate an IPv6-format first network address to the first virtual instance. The first virtual instance is deployed in a first VPC, and an IPv6 prefix, an identifier of the first site, an identifier of the first physical server, and an identifier of the first virtual instance are separately recorded in an IPv6 field of the first network address. Therefore, the first network address may make the first virtual instance be identified in the first VPC.

## Description

This application claims priorities to Chinese Patent Application No. 202310092105.3, filed with the China National Intellectual Property Administration on February 09, 2023 and entitled "CLOUD NETWORK ORIENTED ADDRESS ALLOCATION METHOD AND RELATED DEVICE"; and to Chinese Patent Application No. 202310796903.4, filed with the China National Intellectual Property Administration on June 30, 2023 and entitled "PUBLIC CLOUD-BASED VIRTUAL INSTANCE CONFIGURATION METHOD AND CLOUD MANAGEMENT PLATFORM", both of which are incorporated herein by reference in their entireties.

### TECHNICAL FIELD

Embodiments of this application relate to the field of cloud technologies, and in particular, to a public cloud-based virtual instance configuration method and a cloud management platform.

### BACKGROUND

In a public cloud scenario, a core service that can be provided by a cloud service system for a tenant is a virtual private cloud (virtual private cloud, VPC) service. The tenant may create a dedicated VPC in the system and create a virtual instance in the VPC, to deploy an application of the tenant.

Currently, in the cloud service system, the tenant may plan an internet protocol (internet protocol, IP) address segment for the VPC of the tenant, and allocate IP addresses in the IP address segment to virtual instances in the VPC of the tenant. In a process of allocating the IP address, the tenant needs to make the IP address segment of the VPC of the tenant not overlap an IP address segment of a VPC of another tenant, and needs to make the IP addresses of the virtual instances in the VPC of the tenant different from each other, to ensure normal communication between VPCs and normal communication between virtual instances.

It can be learned from the cloud service system that, when the tenant configures the VPC and the virtual instance, the tenant needs to complete IP address allocation and management, which is extremely difficult. Consequently, a large amount of time of the tenant is consumed, and user experience is poor.

### SUMMARY

Embodiments of this application provide a public cloud-based virtual instance configuration method and a cloud management platform, to simplify an operation of a tenant, quickly respond to a virtual instance creation requirement and an address management requirement of the tenant, and reduce time costs for the tenant, thereby improving user experience.

A first aspect of embodiments of this application provides a public cloud-based virtual instance configuration method. The method is applied to a cloud management platform, and the cloud management platform is configured to manage an infrastructure that provides a public cloud service. The infrastructure includes a plurality of sites, and each site includes a plurality of physical servers. The method includes:

When a first tenant needs to create a virtual instance, the cloud management platform may provide a virtual instance configuration interface for a client used by the first tenant. Therefore, the first tenant may send configuration information of the to-be-created virtual instance to the virtual instance configuration interface, so that the cloud management platform receives, through the virtual instance configuration interface, the configuration information that is of a first virtual instance to-be-created and that is sent by the first tenant. The configuration information indicates a specification required by the first virtual instance, a first site at which the first virtual instance is located, and a first VPC in which the first virtual instance is located.

After receiving the configuration information of the to-be-created virtual instance, the cloud management platform may first select the first site from the plurality of sites based on the configuration information. Then, the cloud management platform may select, at the first site based on the configuration information, a first physical server capable of providing the specification required by the first virtual instance. Then, the cloud management platform may create the first virtual instance on the first physical server based on the configuration information by using a virtualization technology.

The cloud management platform may deploy the first virtual instance in the first VPC. To identify the first virtual instance from the first VPC, the cloud management platform may allocate a first network address in an internet protocol version 6 (internet protocol version 6, IPv6) format to the first virtual instance. An IPv6 prefix, an identifier of the first site, an identifier of the first physical server, and an identifier of the first virtual instance are separately recorded in an IPv6 field of the first network address. It can be learned that the IPv6 field of the first network address may indicate an actual physical location of the first virtual instance in the first VPC.

It can be learned from the foregoing method that after the cloud management platform receives the configuration information that is of the to-be-created virtual instance and that is input by the first tenant, the configuration information indicates the specification required by the first virtual instance, the first site at which the first virtual instance is located, and the first VPC in which the first virtual instance is located. Therefore, based on the configuration information, the cloud management platform may select the first site from the plurality of sites, select, from the plurality of physical servers at the first site, the first physical server capable of providing the specification, create the first virtual instance having the specification on the first physical server, and allocate the IPv6-format first network address to the first virtual instance. The first virtual instance is deployed in the first VPC, and the IPv6 prefix, the identifier of the first site, the identifier of the first physical server, and the identifier of the first virtual instance are separately recorded in the IPv6 field of the first network address. Therefore, the first network address may make the first virtual instance be identified in the first VPC. In the foregoing process, the cloud management platform may not only create the first virtual instance for the first tenant based on a requirement of the first tenant, but also automatically allocate the IPv6-format first network address to the first virtual instance. It can be learned that the first tenant no longer needs to manage the first network address of the first virtual instance, and this part of task may be completed by the cloud management platform. This can simplify an operation of the first tenant, quickly respond to a virtual instance creation requirement and an address management requirement of the first tenant, and reduce time costs for the first tenant, thereby improving user experience.

In a possible implementation, the first VPC is located at the first site. The method further includes: configuring the first VPC to connect to a second VPC, where the second VPC is located at a second site in the plurality of sites; and setting a first routing rule in a router in the second VPC, where the first routing rule includes: forwarding an IPv6-format packet whose destination address includes the first site to the first VPC. In the foregoing implementation, to implement communication between a plurality of virtual instances in the first VPC and a plurality of virtual instances in the second VPC, the cloud management platform may configure the first VPC to complete a communication connection to the second VPC. In the plurality of virtual instances in the first VPC, IPv6-format network addresses of all the virtual instances include the IPv6 prefix and the identifier of the first site. Therefore, the cloud management platform may set the first routing rule in the router in the second VPC. The first routing rule includes: When the router in the second VPC receives an IPv6-format packet sent by a virtual instance in the second VPC, if a destination address of the packet includes the identifier of the first site, the router in the second VPC may send the packet to the first VPC. It can be learned that, during cross-VPC communication, the cloud management platform may reduce workload of the cloud management platform by simplifying the routing rule in the router.

In a possible implementation, the method further includes: setting a second routing rule in a router in the first VPC, where the second routing rule includes: forwarding an IPv6-format packet whose destination address includes the second site to the second VPC. In the foregoing implementation, in the plurality of virtual instances in the second VPC, IPv6-format network addresses of all the virtual instances include the IPv6 prefix and an identifier of the second site. Therefore, the cloud management platform may set the second routing rule in the router in the first VPC. The second routing rule includes: When the router in the first VPC receives an IPv6-format packet sent by a virtual instance in the first VPC, if a destination address of the packet includes the identifier of the second site, the router may send the packet to the second VPC. It can be learned that, during cross-VPC communication, the cloud management platform may reduce workload of the cloud management platform by simplifying the routing rule in the router.

In a possible implementation, the first network address is an IPv6-format ULA address.

In a possible implementation, the method further includes: allocating an IPv6-format second network address to the first virtual instance, where the second network address is an IPv6-format GUA address, and the second network address is used to identify the first virtual instance in a public network. In the foregoing implementation, after allocating the IPv6-format first network address to the first virtual instance, the cloud management platform may enable the first network address to be the IPv6-format ULA address, allocate the IPv6-format second network address to the first virtual instance, and enable the second network address to be the IPv6-format GUA. In this way, the first virtual instance may complete communicating with a remaining virtual instance in a virtual network using the first network address. Therefore, the first network address may be considered as an internal communication address of the first virtual instance. In addition, the first virtual instance may complete communicating with an external terminal device in the public network using the second network address. Therefore, the second network address may be considered as an external communication address of the first virtual instance. It can be learned that the cloud management platform may enable, by combining the ULA address and the GUA address, the first virtual instance to communicate with a remaining virtual instance in a cloud service system, and to communicate with a terminal device outside the cloud service system. The ULA address may be used as a static address, and the GUA address may be used as a dynamic address. Therefore, this can not only reduce workload of the cloud management platform when the cloud management platform performs address management, but also enable the entire cloud service system to support scenarios such as massive large-scale cloud native applications and container communication.

In a possible implementation, the first network address is an IPv6-format GUA address, and the first network address is used to identify the first virtual instance in both the first VPC and a public network. In the foregoing implementation, after allocating the IPv6-format first network address to the first virtual instance, the cloud management platform may enable the first network address to be the IPv6-format GUA address. In this way, the first virtual instance may complete communicating with a remaining virtual instance in a virtual network using the first network address. In addition, the first virtual instance may complete communicating with an external terminal device in the public network using the first network address. It can be learned that the first network address may be considered as both an internal communication address and an external communication address of the first virtual instance. It can be learned that the cloud management platform may enable, using only the GUA address, the first virtual instance to communicate with a remaining virtual instance in a cloud service system, and to communicate with a terminal device outside the cloud service system. The GUA address may be used as a static address. Therefore, this can not only reduce workload of the cloud management platform when the cloud management platform performs address management, but also enable the entire cloud service system to support scenarios such as massive large-scale cloud native applications and container communication.

In a possible implementation, the method further includes: recording a correspondence between an internet protocol version 4 (internet protocol version 4, IPv4) address of each physical server at each site and an IPv6 address segment in which the physical server is located, where an identifier of the site at which the physical server is located, an identifier of the physical server, and an identifier of a virtual instance running on the physical server are recorded in the IPv6 address segment in which the physical server is located; and notifying the first physical server to use an IPv4 address of the first physical server as an outer source address of a nested packet, use an IPv4 address of a second physical server as an outer destination address of the nested packet, use the first network address as an inner source address of the nested packet, use a network address of a second virtual instance as an inner destination address of the nested packet, and send the nested packet to the second physical server, where an inner packet of the nested packet is an IPv6 packet sent by the first virtual instance to the second virtual instance, and the second virtual instance is deployed on the second physical server. In the foregoing implementation, for any physical server, the cloud management platform may record a correspondence between an IPv4 address of the physical server and an IPv6 address segment in which the physical server is located. The IPv6 address segment in which the physical server is located includes IPv6 address segments of network addresses of all virtual instances deployed on the physical server. Therefore, an identifier of a site at which the physical server is located, an identifier of the physical server, and identifiers of all the virtual instances running on the physical server are recorded in the IPv6 address segment in which the physical server is located. When the first virtual instance on the first physical server needs to send an IPv6-format packet to the second virtual instance on the second physical server, a correspondence between the IPv4 address of the first physical server and an IPv6 address segment in which the first physical server is located and a correspondence between the IPv4 address of the second physical server and an IPv6 address segment in which the second physical server is located are recorded. Therefore, the cloud management platform may notify the first physical server of these correspondences, so that the first physical server uses the IPv4 address of the first physical server as the outer source address of the nested packet, uses the IPv4 address of the second physical server as the outer destination address of the nested packet, uses the first network address as the inner source address of the nested packet, and uses the IPv6-format network address of the second virtual instance as the inner destination address of the nested packet. It can be learned that the nested packet includes outer encapsulation and the inner packet, and the inner packet is an IPv6-format packet that needs to be sent by the first virtual instance to the second virtual instance. In this case, the first physical server may send the nested packet to the second physical server, and after obtaining the inner packet through parsing from the nested packet, the second physical server may send the inner packet to the second virtual instance.

In a possible implementation, the method further includes: migrating the first virtual instance from the first physical server to the second physical server, and allocating an IPv6-format third network address to the first virtual instance to replace the first network address, where an IPv6 prefix, an identifier of a site at which the second physical server is located, an identifier of the second physical server, and the identifier of the first virtual instance are recorded in the third network address. In the foregoing implementation, if the first tenant has a migration requirement for the first virtual instance, the cloud management platform may migrate the first virtual instance from the first physical server to the second physical server based on the requirement, and allocate the IPv6-format third network address to the first virtual instance to replace the first network address. An IPv6 prefix, the identifier of the site at which the second physical server is located, the identifier of the second physical server, and the identifier of the first virtual instance are separately recorded in an IPv6 field of the third network address. It can be learned that the IPv6 field of the third network address may indicate a new actual physical location of the first virtual instance.

In a possible implementation, the first virtual instance includes a virtual machine or a container.

In a possible implementation, the plurality of sites include a plurality of availability zones in a public cloud, or the plurality of sites include a plurality of regions in the public cloud, or the plurality of sites include at least one edge site and at least one central cloud site.

A second aspect of embodiments of this application provides a cloud management platform. The cloud management platform is configured to manage an infrastructure that provides a public cloud service. The infrastructure includes a plurality of sites, and each site includes a plurality of physical servers. The cloud management platform includes: a receiving module, configured to obtain, from a virtual instance configuration interface, configuration information that is of a to-be-created virtual instance and that is input by a first tenant, where the configuration information indicates a specification required by the first virtual instance, a first site at which the first virtual instance is located, and a first VPC in which the first virtual instance is located; and a first allocation module, configured to: based on the configuration information, select the first site from the plurality of sites, select, from a plurality of physical servers at the first site, a first physical server capable of providing the specification, create the first virtual instance having the specification on the first physical server, and allocate an IPv6-format first network address to the first virtual instance, where the first virtual instance is deployed in the first VPC, the first network address is used to identify the first virtual instance in the first VPC, and an IPv6 prefix, an identifier of the first site, an identifier of the first physical server, and an identifier of the virtual instance are separately recorded in an IPv6 field of the first network address.

It can be learned from the cloud management platform that after the cloud management platform receives the configuration information that is of the to-be-created virtual instance and that is input by the first tenant, the configuration information indicates the specification required by the first virtual instance, the first site at which the first virtual instance is located, and the first VPC in which the first virtual instance is located. Therefore, based on the configuration information, the cloud management platform may select the first site from the plurality of sites, select, from the plurality of physical servers at the first site, the first physical server capable of providing the specification, create the first virtual instance having the specification on the first physical server, and allocate the IPv6-format first network address to the first virtual instance. The first virtual instance is deployed in the first VPC, and the IPv6 prefix, the identifier of the first site, the identifier of the first physical server, and the identifier of the first virtual instance are separately recorded in the IPv6 field of the first network address. Therefore, the first network address may make the first virtual instance be identified in the first VPC. In the foregoing process, the cloud management platform may not only create the first virtual instance for the first tenant based on a requirement of the first tenant, but also automatically allocate the IPv6-format first network address to the first virtual instance. It can be learned that the first tenant no longer needs to manage the first network address of the first virtual instance, and this part of task may be completed by the cloud management platform. This can simplify an operation of the first tenant, quickly respond to a virtual instance creation requirement and an address management requirement of the first tenant, and reduce time costs for the first tenant, thereby improving user experience.

In a possible implementation, the first VPC is located at the first site. The cloud management platform further includes: a configuration module, configured to configure the first VPC to connect to a second VPC, where the second VPC is located at a second site in the plurality of sites; and a first setting module, configured to set a first routing rule in a router in the second VPC, where the first routing rule includes: forwarding an IPv6-format packet whose destination address includes the first site to the first VPC.

In a possible implementation, the cloud management platform further includes: a second setting module, configured to set a second routing rule in a router in the first VPC, where the second routing rule includes: forwarding an IPv6-format packet whose destination address includes the second site to the second VPC.

In a possible implementation, the first network address is an IPv6-format ULA address.

In a possible implementation, the cloud management platform further includes: a second allocation module, configured to allocate an IPv6-format second network address to the first virtual instance, where the second network address is an IPv6-format GUA address, and the second network address is used to identify the first virtual instance in a public network.

In a possible implementation, the first network address is an IPv6-format GUA address, and the first network address is used to identify the first virtual instance in both the first VPC and a public network.

In a possible implementation, the cloud management platform further includes: a recording module, configured to record a correspondence between an IPv4 address of each physical server at each site and an IPv6 address segment in which the physical server is located, where an identifier of the site at which the physical server is located, an identifier of the physical server, and an identifier of a virtual instance running on the physical server are recorded in the IPv6 address segment in which the physical server is located; and a notification module, configured to notify the first physical server to use an IPv4 address of the first physical server as an outer source address of a nested packet, use an IPv4 address of a second physical server as an outer destination address of the nested packet, use the first network address as an inner source address of the nested packet, use a network address of a second virtual instance as an inner destination address of the nested packet, and send the nested packet to the second physical server, where an inner packet of the nested packet is an IPv6 packet sent by the first virtual instance to the second virtual instance, and the second virtual instance is deployed on the second physical server.

In a possible implementation, the cloud management platform further includes: a migration module, configured to: migrate the first virtual instance from the first physical server to the second physical server, and allocate an IPv6-format third network address to the first virtual instance to replace the first network address, where an IPv6 prefix, an identifier of a site at which the second physical server is located, an identifier of the second physical server, and the identifier of the first virtual instance are recorded in the third network address.

In a possible implementation, the first virtual instance includes a virtual machine or a container.

In a possible implementation, the plurality of sites are a plurality of availability zones in a public cloud, a plurality of regions in the public cloud, or at least one edge site and at least one central cloud site.

A third aspect of embodiments of this application provides a computing device cluster. The computing device cluster includes at least one computing device, and each computing device includes a processor and a memory. The memory is configured to store instructions. The processor is configured to enable, according to the instructions, the computing device cluster to perform the method according to any one of the first aspect or the possible implementations of the first aspect.

A fourth aspect of embodiments of this application provides a computer storage medium. The computer storage medium stores one or more instructions, and when the instructions are executed by one or more computers, the one or more computers are enabled to implement the method according to any one of the first aspect or the possible implementations of the first aspect.

A fifth aspect of embodiments of this application provides a computer program product. The computer program product stores instructions, and when the instructions are executed by a computer, the computer is enabled to implement the method according to any one of the first aspect or the possible implementations of the first aspect.

In embodiments of this application, after the cloud management platform receives the configuration information that is of the to-be-created virtual instance and that is input by the first tenant, the configuration information indicates the specification required by the first virtual instance, the first site at which the first virtual instance is located, and the first VPC in which the first virtual instance is located. Therefore, based on the configuration information, the cloud management platform may select the first site from the plurality of sites, select, from the plurality of physical servers at the first site, the first physical server capable of providing the specification, create the first virtual instance having the specification on the first physical server, and allocate the IPv6-format first network address to the first virtual instance. The first virtual instance is deployed in the first VPC, and the IPv6 prefix, the identifier of the first site, the identifier of the first physical server, and the identifier of the first virtual instance are separately recorded in the IPv6 field of the first network address. Therefore, the first network address may make the first virtual instance be identified in the first VPC. In the foregoing process, the cloud management platform may not only create the first virtual instance for the first tenant based on a requirement of the first tenant, but also automatically allocate the IPv6-format first network address to the first virtual instance. It can be learned that the first tenant no longer needs to manage the first network address of the first virtual instance, and this part of task may be completed by the cloud management platform. This can simplify an operation of the first tenant, quickly respond to a virtual instance creation requirement and an address management requirement of the first tenant, and reduce time costs for the first tenant, thereby improving user experience.

### BRIEF DESCRIPTION OF DRAWINGS

FIG. 1 is a diagram of a structure of a cloud service system according to an embodiment of this application;
FIG. 2 is a diagram of a structure of an IPv6-format network address according to an embodiment of this application;
FIG. 3 is a schematic flowchart of a public cloud-based virtual instance configuration method according to an embodiment of this application;
FIG. 4 is a diagram of another structure of a cloud service system according to an embodiment of this application;
FIG. 5 is another schematic flowchart of a public cloud-based virtual instance configuration method according to an embodiment of this application;
FIG. 6 is a diagram of another structure of a cloud service system according to an embodiment of this application;
FIG. 7 is another schematic flowchart of a public cloud-based virtual instance configuration method according to an embodiment of this application;
FIG. 8 is a diagram of another structure of a cloud service system according to an embodiment of this application;
FIG. 9 is another schematic flowchart of a public cloud-based virtual instance configuration method according to an embodiment of this application;
FIG. 10 is another schematic flowchart of a public cloud-based virtual instance configuration method according to an embodiment of this application;
FIG. 11 is a diagram of another structure of a cloud service system according to an embodiment of this application;
FIG. 12 is a diagram of a structure of a cloud management platform according to an embodiment of this application;
FIG. 13 is a diagram of a structure of a computing device according to an embodiment of this application;
FIG. 14 is a diagram of a structure of a computing device cluster according to an embodiment of this application; and
FIG. 15 is a diagram in which computing devices in a computer cluster are connected via a network according to an embodiment of this application.

### DESCRIPTION OF EMBODIMENTS

Embodiments of this application provide a public cloud-based virtual instance configuration method and a cloud management platform, to simplify an operation of a tenant, quickly respond to a virtual instance creation requirement and an address management requirement of the tenant, and reduce time costs for the tenant, thereby improving user experience.

In the specification, claims, and accompanying drawings of this application, the terms "first", "second", and so on are intended to distinguish between similar objects but do not necessarily indicate a specific order or sequence. It should be understood that the terms used in such a way are interchangeable in proper circumstances, which is merely a discrimination manner that is used when objects having a same attribute are described in embodiments of this application. In addition, the terms "include", "contain" and any other variants mean to cover the non-exclusive inclusion, so that a process, method, system, product, or device that includes a series of units is not necessarily limited to those units, but may include other units not expressly listed or inherent to such a process, method, product, or device.

In a public cloud scenario, a core service that can be provided by a cloud service system for a tenant is a VPC service. The tenant may create a dedicated VPC in the system and create a virtual instance in the VPC, to deploy an application of the tenant.

Currently, in the cloud service system, the tenant may plan an IP address segment for the VPC of the tenant, and allocate IP addresses in the IP address segment to virtual instances in the VPC of the tenant. In a process of allocating the IP address, the tenant needs to make the IP address segment of the VPC of the tenant not overlap an IP address segment of a VPC of another tenant, and needs to make the IP addresses of the virtual instances in the VPC of the tenant different from each other, to ensure normal communication between VPCs and normal communication between virtual instances.

It can be learned from the cloud service system that, when the tenant configures the VPC and the virtual instance, the tenant needs to complete IP address allocation and management, which is extremely difficult. Consequently, a large amount of time of the tenant is consumed, and user experience is poor.

Further, in the cloud service system, a cloud management platform (a management and control plane) needs to centrally manage the IP addresses of all the virtual instances, including virtual instance migration (IP address refreshing), communication (IP address resolution), and the like. The cloud management platform needs to spend a lot of workload to complete these tasks, resulting in high costs.

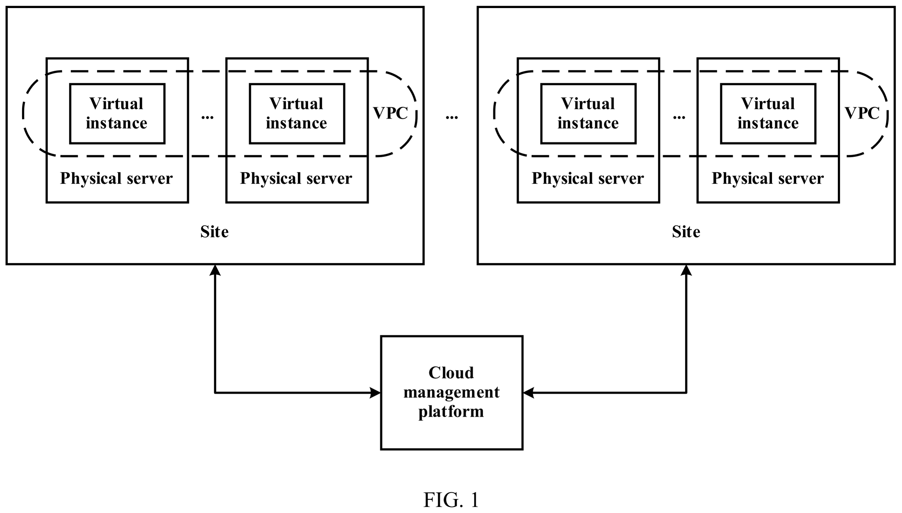

To resolve the foregoing problem, an embodiment of this application provides a public cloud-based virtual instance configuration method. The method may be implemented through a cloud management platform in a cloud service system. FIG. 1 is a diagram of a structure of a cloud service system according to an embodiment of this application. As shown in FIG. 1, the cloud service system includes an infrastructure that can provide a public cloud service and a cloud management platform that manages the infrastructure. The following separately describes the cloud management platform and the infrastructure.

The cloud management platform may centrally manage virtual instances of a plurality of sites in the entire cloud service system (for example, select a physical server at a site, create a virtual instance on the physical server, and allocate an IPv6-format network address to the virtual instance), and may be open to tenants outside the system, and respond to their requests. For example, the cloud management platform may provide various interfaces such as a login interface and a virtual instance configuration interface for a client of a tenant (for example, a terminal device used by the tenant or a browser on the terminal device) to access. The cloud management platform may perform identity authentication on the client of the tenant through the login interface. After the identity authentication succeeds, the client of the tenant may be allowed to log in to the cloud management platform. The cloud management platform may further allow, through the virtual instance configuration interface, the client of the tenant to send configuration information of a to-be-created virtual instance to the cloud management platform. Based on the configuration information, the cloud management platform may select a site for the tenant and select a physical server, to further create the virtual instance that provides a cloud service for the tenant.

The infrastructure includes the plurality of sites (sites) for the cloud management platform to select from, and each site includes a plurality of physical servers that can be selected by the cloud management platform. The cloud management platform may select a site for the tenant under an indication of the client of the tenant, and select at least one physical server from the site, to create a plurality of dedicated virtual instances (which may also be referred to as cloud instances) for the tenant on these physical servers. A network between the plurality of virtual instances may form a tenant-dedicated VPC. It can be learned that there may be a binding relationship between the VPC of the tenant and the site allocated to the tenant. It should be noted that a network between the plurality of virtual instances dedicated to the tenant and a plurality of virtual instances dedicated to another tenant may form a global VPC. In this case, there is no binding relationship between the global VPC and any site.

The plurality of sites in the infrastructure may be presented in a plurality of forms. For example, the plurality of sites may be a plurality of regions (regions) in the infrastructure. For another example, the plurality of sites may be a plurality of availability zones (availability zones) in the infrastructure. For still another example, the plurality of sites may be at least one edge site, at least one central cloud site, and the like in the infrastructure.

Further, the virtual instance may also be presented in a plurality of forms. For example, the virtual instance may be a virtual machine (virtual machine, VM) on a physical server. For another example, the virtual instance may be a container (docker) on a physical server. It should be noted that communication may be implemented inside the cloud service system, to be specific, different virtual instances of a same tenant or virtual instances of different tenants may communicate with each other. The cloud service system may alternatively communicate with the outside, to be specific, a virtual instance of a tenant may communicate with an external terminal device via a public network. To implement the communication, the cloud management platform may configure a dedicated IPv6-format network address for the virtual instance. In this case, all packets transmitted between virtual instances are generated based on the IPv6-format network address.

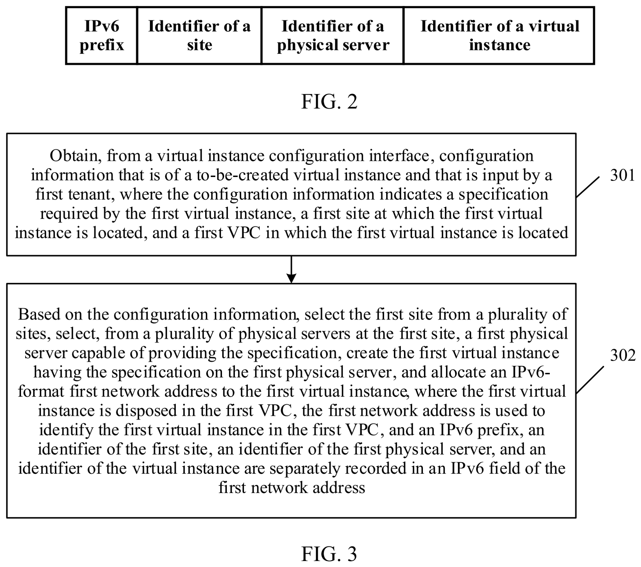

Further, as shown in FIG. 2 (FIG. 2 is a diagram of a structure of an IPv6-format network address according to an embodiment of this application), the IPv6-format network address of a virtual instance includes a plurality of fields, and the plurality of fields include an IPv6 field. An IPv6 prefix, an identifier of a site at which a physical server on which the virtual instance is located is located, an identifier of the physical server on which the virtual instance is located, and an identifier of the virtual instance are recorded in the IPv6 field. It can be learned that the IPv6-format network address of the virtual instance may make the virtual instance be identified in a VPC or a public network, to implement communication.

Because the cloud management platform allocates a new-format network address (the IPv6-format network address) to the virtual instance, the cloud management platform can implement more convenient and efficient unified management on the virtual instance. The following separately describes the process by using a plurality of embodiments. FIG. 3 is a schematic flowchart of a public cloud-based virtual instance configuration method according to an embodiment of this application. As shown in FIG. 3, a first embodiment of the method includes the following steps.

301: Obtain, from a virtual instance configuration interface, configuration information that is of a to-be-created virtual instance and that is input by a first tenant, where the configuration information indicates a specification required by the first virtual instance, a first site at which the first virtual instance is located, and a first VPC in which the first virtual instance is located.

In this embodiment, when the first tenant needs to create the virtual instance, a cloud management platform may provide the virtual instance configuration interface for a client used by the first tenant (for example, a configuration input bar in a virtual instance creation interface). Therefore, the first tenant may send the configuration information of the to-be-created virtual instance to the virtual instance configuration interface through the client, so that the cloud management platform receives, through the virtual instance configuration interface, the configuration information sent by the client of the first tenant. The configuration information indicates the specification required by the first virtual instance (that is, the virtual instance that needs to be created by the first tenant), the first site at which the first virtual instance is located, and the first VPC in which the first virtual instance is located.

302: Based on the configuration information, select the first site from a plurality of sites, select, from a plurality of physical servers at the first site, a first physical server capable of providing the specification, create the first virtual instance having the specification on the first physical server, and allocate an IPv6-format first network address to the first virtual instance, where the first virtual instance is deployed in the first VPC, the first network address is used to identify the first virtual instance in the first VPC, and an IPv6 prefix, an identifier of the first site, an identifier of the first physical server, and an identifier of the virtual instance are separately recorded in an IPv6 field of the first network address.

After receiving the configuration information, the cloud management platform may first select the first site from the plurality of sites based on the configuration information. Then, the cloud management platform may select, at the first site based on the configuration information, the first physical server capable of providing the specification required by the first virtual instance (for example, a network resource, a computing resource, and a storage resource required by the first virtual instance). Then, the cloud management platform may create the first virtual instance on the first physical server based on the configuration information by using a virtualization technology.

It should be noted that the cloud management platform may deploy the first virtual instance in the first VPC. The first VPC may have the following multiple cases: (1) The first VPC may be located at the first site, in other words, the first VPC is a VPC dedicated to the first tenant. Therefore, there is a binding relationship between the first VPC and the first site. (2) The first VPC covers all sites, in other words, the first VPC is a global VPC (that is, a VPC shared by the first tenant and another tenant). Therefore, there is no binding relationship between the first VPC and any site.

After creating the first virtual instance in the first VPC, to identify the first virtual instance from the first VPC, the cloud management platform may allocate the IPv6-format first network address to the first virtual instance based on an actual physical location of the first virtual instance. The IPv6 prefix, the identifier of the first site, the identifier of the first physical server, and the identifier of the first virtual instance are separately recorded in the IPv6 field of the first network address. It can be learned that the IPv6 field of the first network address may indicate the actual physical location of the first virtual instance.

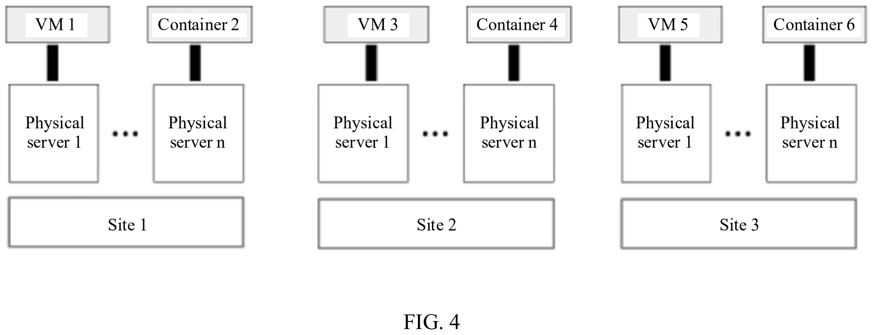

For example, as shown in FIG. 4 (FIG. 4 is a diagram of another structure of a cloud service system according to an embodiment of this application), it is assumed that the cloud service system includes three sites: a site 1, a site 2, and a site 3, the site 1 includes a physical server 1, a physical server 2, ..., and a physical server n, the site 2 includes a physical server 1, a physical server 2, ..., and a physical server n, and the site 3 includes a physical server 1, a physical server 2, ..., and a physical server n.

The cloud management platform creates a VM 1 on the physical server 1 at the site 1, and creates a container 2 on the physical server n at the site 1. Both the VM 1 and the container 2 are disposed in a VPC 1 of a tenant 1. The cloud management platform creates a VM 3 on the physical server 1 at the site 2, and creates a container 4 on the physical server n at the site 2. Both the VM 3 and the container 4 are disposed in a VPC 2 of a tenant 2. The cloud management platform creates a VM 5 on the physical server 1 at the site 3, and creates a container 6 on the physical server n at the site 3. Both the VM 5 and the container 6 are disposed in a VPC 3 of a tenant 3.

In this case, the cloud management platform may allocate an IPv6-format network address FD40:0001:0000:0001::1/128 to the VM 1, where "FD40" is an IPv6 prefix, "0001" is an identity document (identity document, ID) of the site 1, "0000:0001" is an ID of the physical server 1 at the site 1, "::1" is an ID of the VM 1, and "/128" is a number of virtual instances at the site 1 (128 virtual instances may be deployed at the site 1).

The cloud management platform may allocate an IPv6-format network address FD40:0001:0000:000n::2/128 to the container 2. The cloud management platform may allocate an IPv6-format network address FD40:0002:0000:0001::1/128 to the VM 3. The cloud management platform may allocate an IPv6-format network address FD40:0002:0000:000n::2/128 to the container 4. The cloud management platform may allocate an IPv6-format network address FD40:0003:0000:0001::1/128 to the VM 5. The cloud management platform may allocate an IPv6-format network address FD40:0003:0000:000n::2/128 to the container 6.

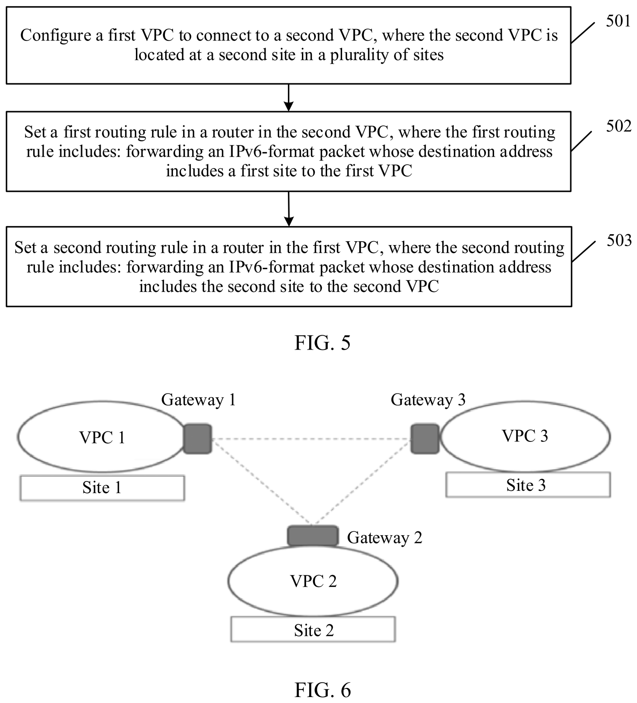

The foregoing describes in detail the first embodiment of the public cloud-based virtual instance configuration method provided in embodiments of this application. The following describes a second embodiment of the public cloud-based virtual instance configuration method provided in embodiments of this application. FIG. 5 is another schematic flowchart of a public cloud-based virtual instance configuration method according to an embodiment of this application. As shown in FIG. 5, the second embodiment of the method includes the following steps.

501: Configure a first VPC to connect to a second VPC, where the second VPC is located at a second site in a plurality of sites.

In this embodiment, a cloud service system usually includes a plurality of sites. Therefore, a plurality of VPCs may be disposed in the cloud service system. It can be learned from the embodiment shown in FIG. 3 that the first VPC is disposed at a first site in the plurality of sites, and the second VPC (the second VPC may be understood as a VPC dedicated to a second tenant) is disposed at the second site in the plurality of sites. In this case, to implement communication between a plurality of virtual instances in the first VPC and a plurality of virtual instances in the second VPC, a cloud management platform may configure the first VPC to complete a communication connection to the second VPC.

Specifically, the cloud management platform may complete the communication connection between the first VPC and the second VPC in the following manner:
The first site includes a plurality of physical servers, a router, and a gateway, and the plurality of physical servers at the first site are connected to the gateway at the first site through the router at the first site. Similarly, the second site also includes a plurality of physical servers, a router, and a gateway, and the plurality of physical servers at the second site are connected to the gateway at the second site through the router at the second site. In this case, the cloud platform may establish a communication channel between the gateway at the first site and the gateway at the second site, which is equivalent to establishing a communication connection between the first site and the second site.

Because the first VPC is disposed at the first site, the gateway at the first site includes a gateway in the first VPC, and the router at the first site includes a router in the first VPC. In addition, the plurality of virtual instances in the first VPC are deployed on the plurality of physical servers at the first site. Therefore, the plurality of virtual instances in the first VPC may be connected to the gateway in the first VPC through the router in the first VPC. Similarly, because the second VPC is disposed at the second site, the gateway at the second site includes a gateway in the second VPC, and the router at the second site includes a router in the second VPC. In addition, the plurality of virtual instances in the second VPC are deployed on the plurality of physical servers at the second site. Therefore, the plurality of virtual instances in the second VPC may be connected to the gateway in the second VPC through the router in the second VPC. In this case, the cloud management platform establishes the communication connection between the first VPC and the second VPC.

For example, as shown in FIG. 6 (FIG. 6 is a diagram of another structure of a cloud service system according to an embodiment of this application, and FIG. 6 is drawn based on FIG. 4), it is assumed that the VPC 1 is located at the site 1, the VPC 2 is located at the site 2, and the VPC 3 is located at the site 3. The cloud management platform enables every two of a gateway 1 in the VPC 1, a gateway 2 in the VPC 2, and a gateway 3 in the VPC 3 to be interconnected with each other, in other words, every two of the VPC 1, the VPC 2, and the VPC 3 may communicate with each other.

502: Set a first routing rule in the router in the second VPC, where the first routing rule includes: forwarding an IPv6-format packet whose destination address includes the first site to the first VPC.

In the plurality of virtual instances in the first VPC, IPv6-format network addresses of all the virtual instances include an IPv6 prefix and an identifier of the first site. Therefore, the cloud management platform may set the first routing rule in the router in the second VPC. The first routing rule includes: When the router in the second VPC receives an IPv6-format packet sent by a virtual instance in the second VPC, if a destination address of the packet includes the identifier of the first site, the packet may be forwarded to the gateway in the first VPC through the gateway in the second VPC, so that the gateway in the first VPC sends the packet to the router in the first VPC, and then the router in the first VPC sends the packet to a virtual instance in the first VPC.

503: Set a second routing rule in the router in the first VPC, where the second routing rule includes: forwarding an IPv6-format packet whose destination address includes the second site to the second VPC.

Correspondingly, in the plurality of virtual instances in the second VPC, IPv6-format network addresses of all the virtual instances include the IPv6 prefix and an identifier of the second site. Therefore, the cloud management platform may set the second routing rule in the router in the first VPC. The second routing rule includes: When the router in the first VPC receives an IPv6-format packet sent by a virtual instance in the first VPC, if a destination address of the packet includes the identifier of the second site, the packet may be forwarded to the gateway in the second VPC through the gateway in the first VPC, so that the gateway in the second VPC sends the packet to the router in the second VPC, and then the router in the second VPC sends the packet to a virtual instance in the second VPC.

Still refer to the foregoing example. In the first VPC, network addresses of both the VM 1 and the container 2 include the IPv6 prefix "FD40" and the ID "0001" of the site 1. In this case, the cloud management platform may set the following route for the VPC 1 in a router 2 in the VPC 2: If the router 2 receives a packet from a virtual instance in the VPC 2 (for example, the VM 3 or the container 4), and a destination address of the packet includes the ID "0001" of the site 1, the router 2 may directly send the packet to the gateway 1 through the gateway 2, so that the gateway 1 sends the packet to a router 1 in the VPC 1, and then the router 1 sends the packet to a virtual instance in the VPC 1 (for example, the VM 1 or the container 2). Further, the route for the VPC 1 may be described as follows: A next hop of FD40:0001/32 is the gateway 1.

Correspondingly, the cloud management platform may also set a route for the VPC 1 in a router 3 in the VPC 3: If the router 3 receives a packet from a virtual instance in the VPC 2 (for example, the VM 5 or the container 6), and a destination address of the packet includes the ID "0001" of the site 1, the router 3 may directly send the packet to the gateway 1 through the gateway 3, so that the gateway 1 sends the packet to the router 1, and then the router 1 sends the packet to the virtual instance in the VPC 1 (for example, the VM 1 or the container 2). Further, the route for the VPC 1 may also be described as follows: The next hop of FD40:0001/32 is the gateway 1.

Further, the cloud management platform may further set, in the router 1, a route for the VPC 2: A next hop of FD40:0002/32 is the gateway 2.

Further, the cloud management platform may further set, in the router 3, a route for the VPC 2: The next hop of FD40:0002/32 is the gateway 2.

Further, the cloud management platform may further set, in the router 1, a route for the VPC 3: A next hop of FD40:0003/32 is the gateway 3.

Further, the cloud management platform may further set, in the router 2, a route for the VPC 3: The next hop of FD40:0003/32 is the gateway 3.

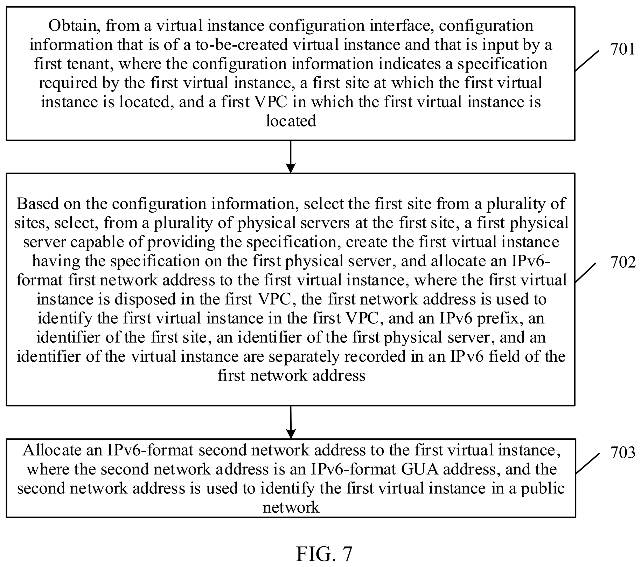

The foregoing describes in detail the second embodiment of the public cloud-based virtual instance configuration method provided in embodiments of this application. The following describes a third embodiment of the public cloud-based virtual instance configuration method provided in embodiments of this application. FIG. 7 is another schematic flowchart of a public cloud-based virtual instance configuration method according to an embodiment of this application. As shown in FIG. 7, the third embodiment of the method includes the following steps.

701: Obtain, from a virtual instance configuration interface, configuration information that is of a to-be-created virtual instance and that is input by a first tenant, where the configuration information indicates a specification required by the first virtual instance, a first site at which the first virtual instance is located, and a first VPC in which the first virtual instance is located.

702: Based on the configuration information, select the first site from a plurality of sites, select, from a plurality of physical servers at the first site, a first physical server capable of providing the specification, create the first virtual instance having the specification on the first physical server, and allocate an IPv6-format first network address to the first virtual instance, where the first virtual instance is deployed in the first VPC, the first network address is used to identify the first virtual instance in the first VPC, and an IPv6 prefix, an identifier of the first site, an identifier of the first physical server, and an identifier of the virtual instance are separately recorded in an IPv6 field of the first network address.

For descriptions of step 701 and step 702, refer to the related description parts of step 301 and step 302 in the embodiment shown in FIG. 3. Details are not described herein again.

703: Allocate an IPv6-format second network address to the first virtual instance, where the second network address is an IPv6-format GUA address, and the second network address is used to identify the first virtual instance in a public network.

In this embodiment, after a cloud management platform allocates the IPv6-format first network address to the first virtual instance, the cloud management platform may enable, in the following plurality of manners, the first virtual instance to be identifiable in both the first VPC and the public network.
(1) After allocating the IPv6-format first network address to the first virtual instance, the cloud management platform may enable the first network address to be the IPv6-format universal local area network address (universal local area network address, ULA), allocate the IPv6-format second network address to the first virtual instance, and enable the second network address to be the IPv6-format global unicast address (global unicast address, GUA).

It should be noted that a new IPv6 prefix, the identifier of the first site, the identifier of the first physical server, and the identifier of the first virtual instance are separately recorded in an IPv6 field of the second network address. It can be learned that the IPv6 field of the second network address may also indicate an actual physical location of the first virtual instance.

In this way, the first virtual instance may complete communicating with a remaining virtual instance in a virtual network (that is, inside a cloud service system) using the first network address. Therefore, the first network address may be considered as an internal communication address of the first virtual instance. In addition, the first virtual instance may complete communicating with an external terminal device in the public network (that is, outside the cloud service system) using the second network address. Therefore, the second network address may be considered as an external communication address of the first virtual instance.

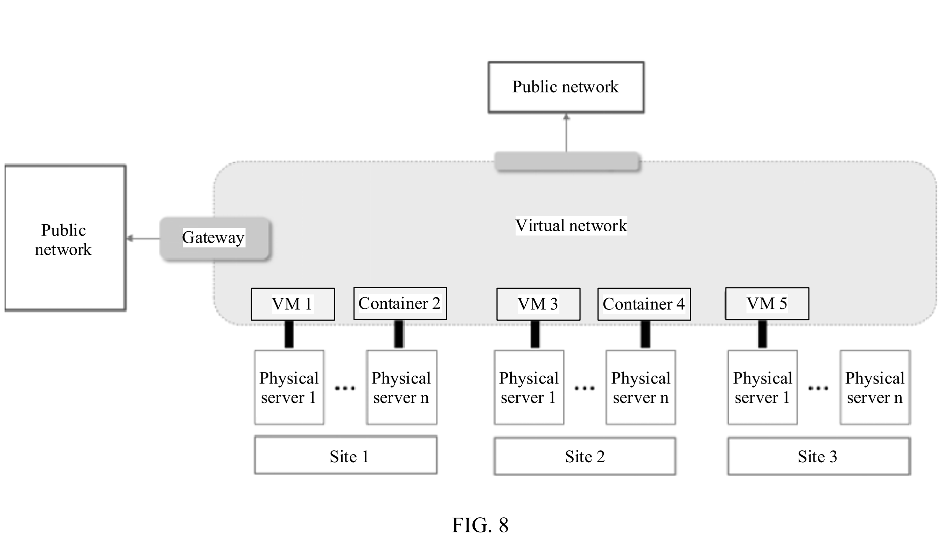

For example, as shown in FIG. 8 (FIG. 8 is a diagram of another structure of a cloud service system according to an embodiment of this application, and FIG. 8 is drawn based on FIG. 6 or FIG. 4), to enable the VM 1 to communicate with the public network (for example, the internet or a customer data center), the cloud management platform may allocate two IPv6-format network addresses to the VM 1. The first network address is a ULA address FD40:0001:0000:0001::1/128, and the second network address is a GUA address 3001:0001:0000:0001::1/128. It can be learned that a difference between the two network addresses is that IPv6 prefixes are different.

In this case, the VM 1 may perform communication in the virtual network using the ULA address, and may further perform communication in the public network using the GUA address.

(2) After allocating the IPv6-format first network address to the first virtual instance, the cloud management platform may enable the first network address to be an IPv6-format GUA address. In this way, the first virtual instance may complete communicating with a remaining virtual instance in a virtual network (that is, inside a cloud service system) using the first network address. In addition, the first virtual instance may complete communicating with an external terminal device in the public network (that is, outside the cloud service system) using the first network address. It can be learned that the first network address may be considered as both an internal communication address and an external communication address of the first virtual instance.

Still refer to the foregoing example. To enable the VM 1 to communicate with the public network (for example, the internet or a customer data center), the cloud management platform may allocate an IPv6-format network address to the VM 1, where the network address is a GUA address 3001:0001:0000:0001::1/128.

In this case, the VM 1 may perform communication in the virtual network using the GUA address, and may further perform communication in the public network using the GUA address.

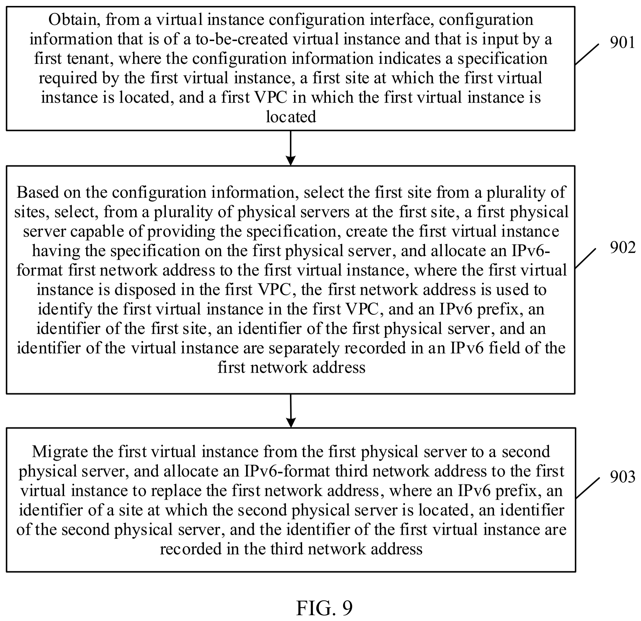

The foregoing describes in detail the third embodiment of the public cloud-based virtual instance configuration method provided in embodiments of this application. The following describes a fourth embodiment of the public cloud-based virtual instance configuration method provided in embodiments of this application. FIG. 9 is another schematic flowchart of a public cloud-based virtual instance configuration method according to an embodiment of this application. As shown in FIG. 9, the fourth embodiment of the method includes the following steps.

901: Obtain, from a virtual instance configuration interface, configuration information that is of a to-be-created virtual instance and that is input by a first tenant, where the configuration information indicates a specification required by the first virtual instance, a first site at which the first virtual instance is located, and a first VPC in which the first virtual instance is located.

902: Based on the configuration information, select the first site from a plurality of sites, select, from a plurality of physical servers at the first site, a first physical server capable of providing the specification, create the first virtual instance having the specification on the first physical server, and allocate an IPv6-format first network address to the first virtual instance, where the first virtual instance is deployed in the first VPC, the first network address is used to identify the first virtual instance in the first VPC, and an IPv6 prefix, an identifier of the first site, an identifier of the first physical server, and an identifier of the virtual instance are separately recorded in an IPv6 field of the first network address.

For descriptions of step 901 and step 902, refer to the related description parts of step 301 and step 302 in the embodiment shown in FIG. 3. Details are not described herein again.

903: Migrate the first virtual instance from the first physical server to a second physical server, and allocate an IPv6-format third network address to the first virtual instance to replace the first network address, where an IPv6 prefix, an identifier of a site at which the second physical server is located, an identifier of the second physical server, and the identifier of the first virtual instance are recorded in the third network address.

In this embodiment, after a cloud management platform allocates the IPv6-format first network address to the first virtual instance, if the first tenant has a migration requirement for the first virtual instance, the cloud management platform may migrate the first virtual instance from the first physical server to the second physical server based on the requirement, and allocate the IPv6-format third network address to the first virtual instance to replace the first network address. An IPv6 prefix, the identifier of the site at which the second physical server is located, the identifier of the second physical server, and the identifier of the first virtual instance are separately recorded in an IPv6 field of the third network address. It can be learned that the IPv6 field of the third network address may indicate a new actual physical location of the first virtual instance.

Still refer to the example shown in FIG. 4. After the cloud management platform migrates the VM 1 from the physical server 1 at the site 1 to the physical server n at the site 1, the cloud management platform may allocate a new IPv6-format network address FD40:0001:0000:000n::1/128 to the VM 1.

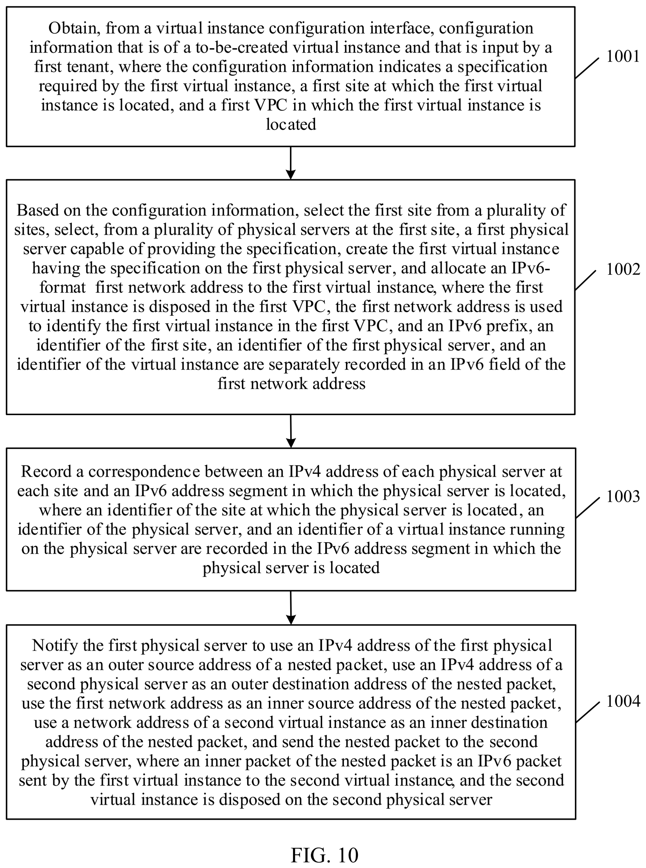

The foregoing describes in detail the fourth embodiment of the public cloud-based virtual instance configuration method provided in embodiments of this application. The following describes a fifth embodiment of the public cloud-based virtual instance configuration method provided in embodiments of this application. FIG. 10 is another schematic flowchart of a public cloud-based virtual instance configuration method according to an embodiment of this application. As shown in FIG. 10, the fifth embodiment of the method includes the following steps.

1001: Obtain, from a virtual instance configuration interface, configuration information that is of a to-be-created virtual instance and that is input by a first tenant, where the configuration information indicates a specification required by the first virtual instance, a first site at which the first virtual instance is located, and a first VPC in which the first virtual instance is located.

1002: Based on the configuration information, select the first site from a plurality of sites, select, from a plurality of physical servers at the first site, a first physical server capable of providing the specification, create the first virtual instance having the specification on the first physical server, and allocate an IPv6-format first network address to the first virtual instance, where the first virtual instance is deployed in the first VPC, the first network address is used to identify the first virtual instance in the first VPC, and an IPv6 prefix, an identifier of the first site, an identifier of the first physical server, and an identifier of the virtual instance are separately recorded in an IPv6 field of the first network address.

For descriptions of step 1001 and step 1002, refer to the related description parts of step 301 and step 302 in the embodiment shown in FIG. 3. Details are not described herein again.

1003: Record a correspondence between an IPv4 address of each physical server at each site and an IPv6 address segment in which the physical server is located, where an identifier of the site at which the physical server is located, an identifier of the physical server, and an identifier of a virtual instance running on the physical server are recorded in the IPv6 address segment in which the physical server is located.

In this embodiment, after a cloud management platform allocates the IPv6-format first network address to the first virtual instance, for any physical server in all physical servers at the plurality of sites, the cloud management platform may record a correspondence between an IPv4 address (which may also be referred to as an IPv4-format network address) of the physical server and an IPv6 address segment in which the physical server is located. The IPv6 address segment in which the physical server is located includes IPv6 address segments of network addresses of all virtual instances deployed on the physical server. Therefore, an identifier of a site at which the physical server is located, an identifier of the physical server, and identifiers of all the virtual instances running on the physical server are recorded in the IPv6 address segment in which the physical server is located.

1004: Notify the first physical server to use an IPv4 address of the first physical server as an outer source address of a nested packet, use an IPv4 address of a second physical server as an outer destination address of the nested packet, use the first network address as an inner source address of the nested packet, use a network address of a second virtual instance as an inner destination address of the nested packet, and send the nested packet to the second physical server, where an inner packet of the nested packet is an IPv6 packet sent by the first virtual instance to the second virtual instance, and the second virtual instance is deployed on the second physical server.

When the first virtual instance on the first physical server needs to send an IPv6-format packet to the second virtual instance on the second physical server, a correspondence between the IPv4 address of the first physical server and an IPv6 address segment in which the first physical server is located (the IPv6 address segment includes the first network address) and a correspondence between the IPv4 address of the second physical server and an IPv6 address segment in which the second physical server is located (the IPv6 address segment includes the IPv6-format network address of the second virtual instance) are recorded. Therefore, the cloud management platform may notify the first physical server of these correspondences, so that the first physical server uses the IPv4 address of the first physical server as the outer source address of the nested packet, uses the IPv4 address of the second physical server as the outer destination address of the nested packet, uses the first network address as the inner source address of the nested packet, and uses the IPv6-format network address of the second virtual instance as the inner destination address of the nested packet. It can be learned that the nested packet includes outer encapsulation and the inner packet, and the inner packet is an IPv6-format packet that needs to be sent by the first virtual instance to the second virtual instance. In this case, the first physical server may send the nested packet to the second physical server, and after obtaining the inner packet through parsing from the nested packet, the second physical server may send the inner packet to the second virtual instance.

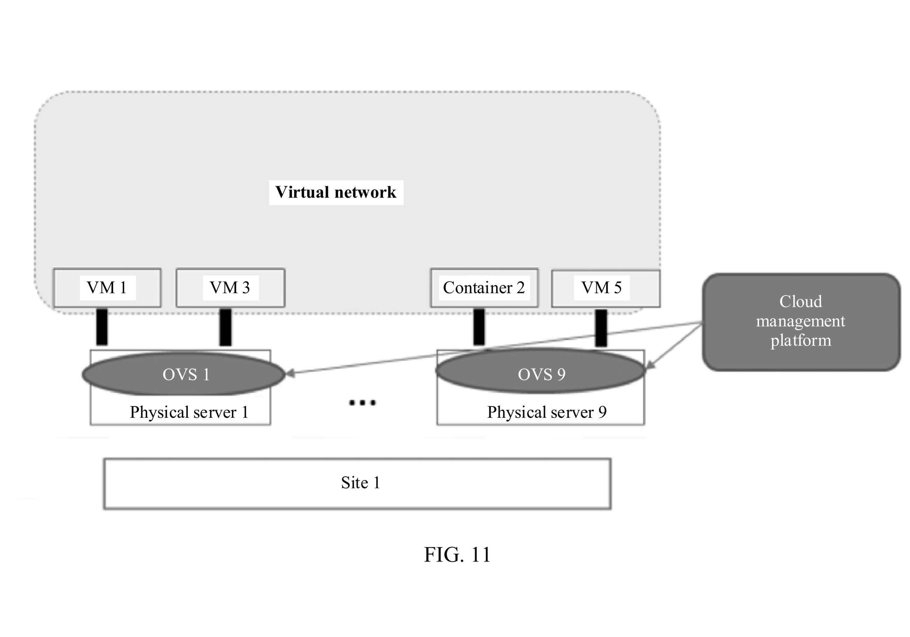

For example, as shown in FIG. 11 (FIG. 11 is a diagram of another structure of a cloud service system according to an embodiment of this application), it is assumed that a site 1 includes a physical server 1, a physical server 2, ..., and a physical server 9, a VM 1 and a VM 3 are deployed on the physical server 1, a container 2 and a VM 5 are deployed on the physical server 9, and a virtual switch (openvswitch, OVS) 1 on the physical server 1 and an OVS 9 on the physical server 9 may be controlled by the cloud management platform. In this case, the cloud management platform may configure the following virtual network interfaces and IPv6-format network addresses for the VM 1, the VM 3, the container 2, and the VM 5 through the OVS 1 and the OVS 9:
VM 1: VNI=1, FD40:0001:0000:0001::1/128 (the address is referred to as IPv6-1 for short);
VM 3: VNI=2, FD40:0001:0000:0001::1/128 (the address is referred to as IPv6-3 for short);
container 2: VNI=1, FD40:0001:0000:0009::2/128 (the address is referred to as IPv6-2 for short); and
VM 5: VNI=2, FD40:0001:0000:0009::2/128 (the address is referred to as IPv6-4 for short).

Herein, the VNI is an identifier of a tenant, VNI=1 indicates that the VM 1 and the container 2 belong to a tenant 1, and VNI=2 indicates that the VM 3 and the VM 5 belong to a tenant 5. In this case, an IPv4-format network address of the physical server 1 and an IIPv-format network address of the physical server are as follows:
physical server 1: 10.0.0.1 (the address is referred to as IPv4-1 for short); and
physical server 9: 10.0.0.2 (the address is referred to as IPv4-2 for short).

In this case, the cloud management platform may record a correspondence between IPv4-1, IPv6-1, and IPv6-2, and a correspondence between IPv4-2, IPv6-3, and IPv6-4 through the OVS 1 and the OVS 9. When the VM 1 needs to send an IPv6-format packet to the container 2, the cloud management platform may enable, based on the foregoing correspondences, the OVS 1 to encapsulate the IPv6-format packet of the VM 1, to obtain a nested packet shown in Table 1.

**Table 1**

| Outer source address | Outer destination address | Tenant identifier | Inner source address | Inner destination address | ... |
|---|---|---|---|---|---|
| IPv4-1 | IPv4-2 | VNI=1 | IPv6-1 | IPv6-2 | ... |

After obtaining the nested packet, the OVS 1 may send the nested packet to an OVS 9, so that the OVS 2 obtains the IPv6-format packet through parsing from the nested packet, and provides the packet to the container 2.

When the VM 3 needs to send an IPv6-format packet to the VM 5, the cloud management platform may enable, based on the foregoing correspondences, the OVS 1 to encapsulate the IPv6-format packet of the VM 3, to obtain a nested packet shown in Table 2.

**Table 2**

| Outer source address | Outer destination address | Tenant identifier | Inner source address | Inner destination address | ... |
|---|---|---|---|---|---|
| IPv4-1 | IPv4-2 | VNI=2 | IPv6-3 | IPv6-4 | ... |

After obtaining the nested packet, the OVS 1 may send the nested packet to the OVS 2, so that the OVS 2 obtains the IPv6-format packet through parsing from the nested packet, and provides the packet to the VM 5.

It can be learned from the first embodiment to the fifth embodiment that the method provided in embodiments of this application has the following advantages:
In embodiments of this application, after the cloud management platform receives the configuration information that is of the to-be-created virtual instance and that is input by the first tenant, the configuration information indicates the specification required by the first virtual instance, the first site at which the first virtual instance is located, and the first VPC in which the first virtual instance is located. Therefore, based on the configuration information, the cloud management platform may select the first site from the plurality of sites, select, from the plurality of physical servers at the first site, the first physical server capable of providing the specification, create the first virtual instance having the specification on the first physical server, and allocate the IPv6-format first network address to the first virtual instance. The first virtual instance is deployed in the first VPC, and the IPv6 prefix, the identifier of the first site, the identifier of the first physical server, and the identifier of the first virtual instance are separately recorded in the IPv6 field of the first network address. Therefore, the first network address may make the first virtual instance be identified in the first VPC. In the foregoing process, the cloud management platform may not only create the first virtual instance for the first tenant based on a requirement of the first tenant, but also automatically allocate the IPv6-format first network address to the first virtual instance. It can be learned that the first tenant no longer needs to manage the first network address of the first virtual instance, and this part of task may be completed by the cloud management platform. This can simplify an operation of the first tenant, quickly respond to a virtual instance creation requirement and an address management requirement of the first tenant, and reduce time costs for the first tenant, thereby improving user experience.

Further, because the first VPC is disposed at the first site, and the network address of each virtual instance in the first VPC includes the identifier of the first site, during cross-VPC communication, a routing rule of the router in the second VPC may be simplified, to be specific, when the router in the second VPC receives an IPv6-format packet to be sent by the virtual instance in the second VPC, if a destination address of the packet includes the identifier of the first site, the packet is directly forwarded to the first VPC. In this way, work of the cloud management platform can be simplified.

Further, the cloud management platform may enable, by combining the ULA address and the GUA address (which are used as network addresses of the first virtualinstance) and by using only the GUA address (which is used as a network address of the first virtual address), the first virtual instance to communicate with the remaining virtual instance in the cloud service system, and to communicate with the terminal device outside the cloud service system. The ULA address may be used as a static address, and the GUA address may be used as a dynamic address. Therefore, this can not only reduce workload of the cloud management platform when the cloud management platform performs address management, but also enable the entire cloud service system (the virtual network) to support scenarios such as massive large-scale cloud native applications and container communication.

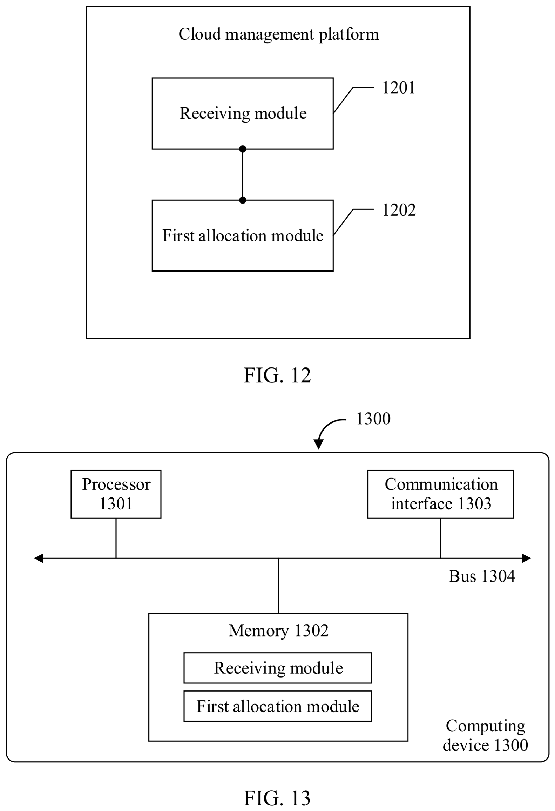

The foregoing describes in detail the public cloud-based virtual instance configuration method provided in embodiments of this application. The following describes the cloud management platform provided in embodiments of this application. FIG. 12 is a diagram of a structure of a cloud management platform according to an embodiment of this application. As shown in FIG. 12, the cloud management platform is configured to manage an infrastructure that provides a public cloud service, the infrastructure includes a plurality of sites, each site includes a plurality of physical servers, and the cloud management platform includes:
a receiving module 1201, configured to obtain, from a virtual instance configuration interface, configuration information that is of a to-be-created virtual instance and that is input by a first tenant, where the configuration information indicates a specification required by the first virtual instance, a first site at which the first virtual instance is located, and a first VPC in which the first virtual instance is located; and for example, the receiving module 1201 may implement step 301 in the embodiment shown in FIG. 3; and
a first allocation module 1202, configured to: based on the configuration information, select the first site from the plurality of sites, select, from a plurality of physical servers at the first site, a first physical server capable of providing the specification, create the first virtual instance having the specification on the first physical server, and allocate an IPv6-format first network address to the first virtual instance, where the first virtual instance is deployed in the first VPC, the first network address is used to identify the first virtual instance in the first VPC, and an IPv6 prefix, an identifier of the first site, an identifier of the first physical server, and an identifier of the virtual instance are separately recorded in an IPv6 field of the first network address; and for example, the first allocation module 1202 may implement step 302 in the embodiment shown in FIG. 3.

In embodiments of this application, after the cloud management platform receives the configuration information that is of the to-be-created virtual instance and that is input by the first tenant, the configuration information indicates the specification required by the first virtual instance, the first site at which the first virtual instance is located, and the first VPC in which the first virtual instance is located. Therefore, based on the configuration information, the cloud management platform may select the first site from the plurality of sites, select, from the plurality of physical servers at the first site, the first physical server capable of providing the specification, create the first virtual instance having the specification on the first physical server, and allocate the IPv6-format first network address to the first virtual instance. The first virtual instance is deployed in the first VPC, and the IPv6 prefix, the identifier of the first site, the identifier of the first physical server, and the identifier of the first virtual instance are separately recorded in the IPv6 field of the first network address. Therefore, the first network address may make the first virtual instance be identified in the first VPC. In the foregoing process, the cloud management platform may not only create the first virtual instance for the first tenant based on a requirement of the first tenant, but also automatically allocate the IPv6-format first network address to the first virtual instance. It can be learned that the first tenant no longer needs to manage the first network address of the first virtual instance, and this part of task may be completed by the cloud management platform. This can simplify an operation of the first tenant, quickly respond to a virtual instance creation requirement and an address management requirement of the first tenant, and reduce time costs for the first tenant, thereby improving user experience.

In a possible implementation, the first VPC is located at the first site. The cloud management platform further includes: a configuration module, configured to configure the first VPC to connect to a second VPC, where the second VPC is located at a second site in the plurality of sites; and a first setting module, configured to set a first routing rule in a router in the second VPC, where the first routing rule includes: forwarding an IPv6-format packet whose destination address includes the first site to the first VPC.

In a possible implementation, the cloud management platform further includes: a second setting module, configured to set a second routing rule in a router in the first VPC, where the second routing rule includes: forwarding an IPv6-format packet whose destination address includes the second site to the second VPC.

In a possible implementation, the first network address is an IPv6-format ULA address.

In a possible implementation, the cloud management platform further includes: a second allocation module, configured to allocate an IPv6-format second network address to the first virtual instance, where the second network address is an IPv6-format GUA address, and the second network address is used to identify the first virtual instance in a public network.

In a possible implementation, the first network address is an IPv6-format GUA address, and the first network address is used to identify the first virtual instance in both the first VPC and a public network.

In a possible implementation, the cloud management platform further includes: a recording module, configured to record a correspondence between an IPv4 address of each physical server at each site and an IPv6 address segment in which the physical server is located, where an identifier of the site at which the physical server is located, an identifier of the physical server, and an identifier of a virtual instance running on the physical server are recorded in the IPv6 address segment in which the physical server is located; and a notification module, configured to notify the first physical server to use an IPv4 address of the first physical server as an outer source address of a nested packet, use an IPv4 address of a second physical server as an outer destination address of the nested packet, use the first network address as an inner source address of the nested packet, use a network address of a second virtual instance as an inner destination address of the nested packet, and send the nested packet to the second physical server, where an inner packet of the nested packet is an IPv6 packet sent by the first virtual instance to the second virtual instance, and the second virtual instance is deployed on the second physical server.

In a possible implementation, the cloud management platform further includes: a migration module, configured to: migrate the first virtual instance from the first physical server to the second physical server, and allocate an IPv6-format third network address to the first virtual instance to replace the first network address, where an IPv6 prefix, an identifier of a site at which the second physical server is located, an identifier of the second physical server, and the identifier of the first virtual instance are recorded in the third network address.

In a possible implementation, the first virtual instance includes a virtual machine or a container.

In a possible implementation, the plurality of sites are a plurality of availability zones in a public cloud, a plurality of regions in the public cloud, or at least one edge site and at least one central cloud site.

It should be noted that, content such as information exchange between the modules/units of the apparatuses and an implementation process is based on the same concept as the method embodiment of this application, and produces the same technical effects as those of the method embodiment of this application. For specific content, refer to the foregoing descriptions in the method embodiment shown in embodiments of this application. Details are not described herein again.

FIG. 13 is a diagram of a structure of a computing device according to an embodiment of this application. As shown in FIG. 13, the computing device 1300 (which may be configured to present the foregoing cloud management platform) includes a processor 1301, a memory 1302, a communication interface 1303, and a bus 1304. The processor 1301, the memory 1302, and the communication interface 1303 are coupled through a bus (not marked in the figure). The memory 1302 stores instructions. When the executable instructions in the memory 1302 are executed, the computing device 1300 performs the method performed by the computing device in the foregoing method embodiment.

The computing device 1300 may be configured as one or more integrated circuits configured to implement the foregoing method, for example, one or more application-specific integrated circuits (application-specific integrated circuits, ASICs), one or more microprocessors (digital signal processors, DSPs), one or more field programmable gate arrays (field programmable gate arrays, FPGAs), or a combination of at least two of these integrated circuit forms. For another example, when the unit in the apparatus is implemented in a form of scheduling a program by a processing element, the processing element may be a general-purpose processor, for example, a central processing unit (central processing unit, CPU) or another processor that may invoke the program. For still another example, the units may be integrated and implemented in a form of a system-on-a-chip (system-on-a-chip, SOC).

The processor 1301 may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor or the like.

The memory 1302 may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example, and not limitation, many forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

The memory 1302 stores executable program code, and the processor 1301 executes the executable program code to separately implement functions of the receiving module and the first allocation module, so as to implement the foregoing public cloud-based virtual instance configuration method. That is, the memory 1302 stores instructions used to perform the foregoing public cloud-based virtual instance configuration method.

The communication interface 1303 uses a transceiver module, for example, but not limited to, a network interface card or a transceiver, to implement communication between the computing device 1300 and another device or a communication network.

The bus 1304 may further include a power bus, a control bus, a status signal bus, and the like, in addition to a data bus. The bus may be a peripheral component interconnect express (peripheral component interconnect express, PCIe) bus, an extended industry standard architecture (extended industry standard architecture, EISA) bus, a unified bus (unified bus, Ubus, or UB), a compute express link (compute express link, CXL), a cache coherent interconnect for accelerators (cache coherent interconnect for accelerators, CCIX), or the like. Buses may be classified into an address bus, a data bus, a control bus, and the like.

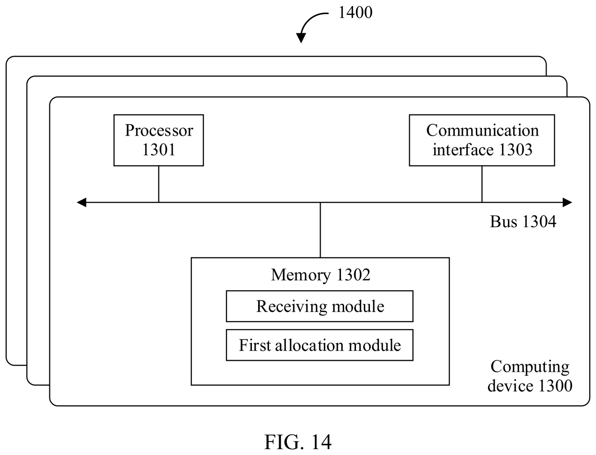

FIG. 14 is a diagram of a structure of a computing device cluster according to an embodiment of this application. As shown in FIG. 14, the computing device cluster 1400 includes at least one computing device 1300.

As shown in FIG. 14, the computing device cluster 1400 includes at least one computing device 1300. Memories 1302 in one or more computing devices 1300 in the computing device cluster 1400 may store same instructions used to perform the foregoing public cloud-based virtual instance configuration method.

In some possible implementations, alternatively, the memories 1302 in the one or more computing devices 1300 in the computing device cluster 1400 may separately store some instructions used to perform the foregoing public cloud-based virtual instance configuration method. In other words, a combination of the one or more computing devices 1300 may jointly execute instructions used to perform the foregoing public cloud-based virtual instance configuration method.

It should be noted that memories 1302 in different computing devices 1300 in the computing device cluster 1400 may store different instructions that are respectively used to perform some functions of the cloud management platform. In other words, the instructions stored in the memories 1302 in the different computing devices 1300 may be used to implement functions of one or more of modules such as the receiving module and the first allocation module.

In some possible implementations, the one or more computing devices 1300 in the computing device cluster 1400 may be connected via a network. The network may be a wide area network, a local area network, or the like.

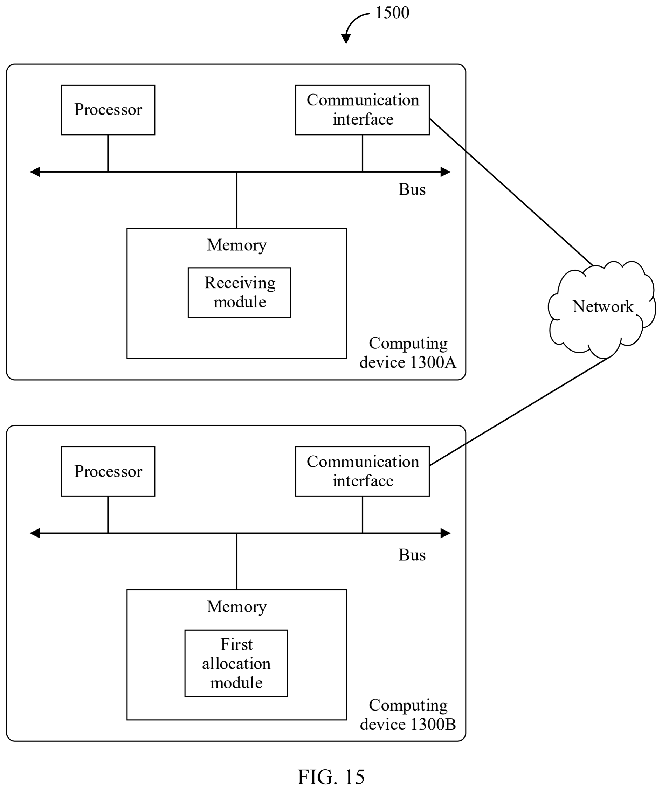

FIG. 15 is a diagram in which computing devices in a computing cluster are connected via a network according to an embodiment of this application. As shown in FIG. 15, two computing devices 1300A and 1300B are connected via a network. Specifically, each computing device is connected to the network through a communication interface of the computing device.

In a possible implementation, a memory in the computing device 1300A stores instructions used to perform functions of a transceiver module and an authentication module. In addition, a memory in the computing device 1300B stores instructions used to perform functions of one or more of modules such as the receiving module and the first allocation module.

It should be understood that a function of the computing device 1300A shown in FIG. 15 may alternatively be completed by a plurality of computing devices. Similarly, a function of the computing device 1300B may also be completed by a plurality of computing devices.

An embodiment of this application further relates to a computer storage medium. The computer-readable storage medium stores a program used for signal processing. When the program is run on a computer, the computer is enabled to perform the steps performed by the cloud management platform in the embodiments shown in FIG. 3, FIG. 5, FIG. 7, FIG. 9, and FIG. 10.

An embodiment of this application further relates to a computer program product. The computer program product stores instructions. When the instructions are executed by a computer, the computer is enabled to perform the steps performed by the cloud management platform in the embodiments shown in FIG. 3, FIG. 5, FIG. 7, FIG. 9, and FIG. 10.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, all functional units in embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium and includes several instructions for instructing a computing device (which may be a personal computer, a server, a network device, or the like) to perform all or some of the steps of the methods described in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

## Claims

1. A public cloud-based virtual instance configuration method, wherein the method is applied to a cloud management platform, the cloud management platform is configured to manage an infrastructure that provides a public cloud service, the infrastructure comprises a plurality of sites, each site comprises a plurality of physical servers, and the method comprises:
obtaining, from a virtual instance configuration interface, configuration information that is of a first virtual instance to-be-created and that is input by a first tenant, wherein the configuration information indicates a specification required by the first virtual instance, a first site at which the first virtual instance is located, and a first VPC in which the first virtual instance is located; and
based on the configuration information, selecting the first site from the plurality of sites, selecting, from a plurality of physical servers at the first site, a first physical server capable of providing the specification, creating the first virtual instance having the specification on the first physical server, and allocating an IPv6-format first network address to the first virtual instance, wherein the first virtual instance is deployed in the first VPC, the first network address is used to identify the first virtual instance in the first VPC, and an IPv6 prefix, an identifier of the first site, an identifier of the first physical server, and an identifier of the virtual instance are separately recorded in an IPv6 field of the first network address.

2. The method according to claim 1, wherein the first VPC is located at the first site, and the method further comprises:
configuring the first VPC to connect to a second VPC, wherein the second VPC is located at a second site in the plurality of sites; and
setting a first routing rule in a router in the second VPC, wherein the first routing rule comprises: forwarding an IPv6-format packet whose destination address comprises the first site to the first VPC.

3. The method according to claim 1 or 2, wherein the method further comprises:
setting a second routing rule in a router in the first VPC, wherein the second routing rule comprises: forwarding an IPv6-format packet whose destination address comprises the second site to the second VPC.

4. The method according to any one of claims 1 to 3, wherein the first network address is an IPv6-format ULA address.

5. The method according to claim 4, wherein the method further comprises:
allocating an IPv6-format second network address to the first virtual instance, wherein the second network address is an IPv6-format GUA address, and the second network address is used to identify the first virtual instance in a public network.

6. The method according to any one of claims 1 to 3, wherein the first network address is an IPv6-format GUA address, and the first network address is used to identify the first virtual instance in both the first VPC and a public network.

7. The method according to any one of claims 1 to 6, wherein the method further comprises:
recording a correspondence between an IPv4 address of each physical server at each site and an IPv6 address segment in which the physical server is located, wherein an identifier of the site at which the physical server is located, an identifier of the physical server, and an identifier of a virtual instance running on the physical server are recorded in the IPv6 address segment in which the physical server is located; and
notifying the first physical server to use an IPv4 address of the first physical server as an outer source address of a nested packet, use an IPv4 address of a second physical server as an outer destination address of the nested packet, use the first network address as an inner source address of the nested packet, use a network address of a second virtual instance as an inner destination address of the nested packet, and send the nested packet to the second physical server, wherein an inner packet of the nested packet is an IPv6 packet sent by the first virtual instance to the second virtual instance, and the second virtual instance is deployed on the second physical server.

8. The method according to any one of claims 1 to 7, wherein the method further comprises:
migrating the first virtual instance from the first physical server to the second physical server, and allocating an IPv6-format third network address to the first virtual instance to replace the first network address, wherein an IPv6 prefix, an identifier of a site at which the second physical server is located, an identifier of the second physical server, and the identifier of the first virtual instance are recorded in the third network address.

9. The method according to any one of claims 1 to 8, wherein the first virtual instance comprises a virtual machine or a container.

10. The method according to any one of claims 1 to 9, wherein the plurality of sites are a plurality of availability zones in a public cloud, a plurality of regions in the public cloud, or at least one edge site and at least one central cloud site.

11. A cloud management platform, wherein the cloud management platform is configured to manage an infrastructure that provides a public cloud service, the infrastructure comprises a plurality of sites, each site comprises a plurality of physical servers, and the cloud management platform comprises:
a receiving module, configured to obtain, from a virtual instance configuration interface, configuration information that is of a to-be-created virtual instance and that is input by a first tenant, wherein the configuration information indicates a specification required by the first virtual instance, a first site at which the first virtual instance is located, and a first VPC in which the first virtual instance is located; and
a first allocation module, configured to: based on the configuration information, select the first site from the plurality of sites, select, from a plurality of physical servers at the first site, a first physical server capable of providing the specification, create the first virtual instance having the specification on the first physical server, and allocate an IPv6-format first network address to the first virtual instance, wherein the first virtual instance is deployed in the first VPC, the first network address is used to identify the first virtual instance in the first VPC, and an IPv6 prefix, an identifier of the first site, an identifier of the first physical server, and an identifier of the virtual instance are separately recorded in an IPv6 field of the first network address.

12. The cloud management platform according to claim 11, wherein the first VPC is located at the first site, and the cloud management platform further comprises:
a configuration module, configured to configure the first VPC to connect to a second VPC, wherein the second VPC is located at a second site in the plurality of sites; and
a first setting module, configured to set a first routing rule in a router in the second VPC, wherein the first routing rule comprises: forwarding an IPv6-format packet whose destination address comprises the first site to the first VPC.

13. The cloud management platform according to claim 11 or 12, wherein the cloud management platform further comprises:
a second setting module, configured to set a second routing rule in a router in the first VPC, wherein the second routing rule comprises: forwarding an IPv6-format packet whose destination address comprises the second site to the second VPC.

14. The cloud management platform according to any one of claims 11 to 13, wherein the first network address is an IPv6-format ULA address.

15. The cloud management platform according to claim 14, wherein the cloud management platform further comprises:
a second allocation module, configured to allocate an IPv6-format second network address to the first virtual instance, wherein the second network address is an IPv6-format GUA address, and the second network address is used to identify the first virtual instance in a public network.

16. The cloud management platform according to any one of claims 11 to 13, wherein the first network address is an IPv6-format GUA address, and the first network address is used to identify the first virtual instance in both the first VPC and a public network.

17. The cloud management platform according to any one of claims 11 to 16, wherein the cloud management platform further comprises:
a recording module, configured to record a correspondence between an IPv4 address of each physical server at each site and an IPv6 address segment in which the physical server is located, wherein an identifier of the site at which the physical server is located, an identifier of the physical server, and an identifier of a virtual instance running on the physical server are recorded in the IPv6 address segment in which the physical server is located; and
a notification module, configured to notify the first physical server to use an IPv4 address of the first physical server as an outer source address of a nested packet, use an IPv4 address of a second physical server as an outer destination address of the nested packet, use the first network address as an inner source address of the nested packet, use a network address of a second virtual instance as an inner destination address of the nested packet, and send the nested packet to the second physical server, wherein an inner packet of the nested packet is an IPv6 packet sent by the first virtual instance to the second virtual instance, and the second virtual instance is deployed on the second physical server.

18. The cloud management platform according to any one of claims 11 to 17, wherein the cloud management platform further comprises:
a migration module, configured to: migrate the first virtual instance from the first physical server to the second physical server, and allocate an IPv6-format third network address to the first virtual instance to replace the first network address, wherein an IPv6 prefix, an identifier of a site at which the second physical server is located, an identifier of the second physical server, and the identifier of the first virtual instance are recorded in the third network address.

19. The cloud management platform according to any one of claims 11 to 18, wherein the first virtual instance comprises a virtual machine or a container.

20. The cloud management platform according to any one of claims 11 to 19, wherein the plurality of sites are a plurality of availability zones in a public cloud, a plurality of regions in the public cloud, or at least one edge site and at least one central cloud site.

21. A computing device cluster, wherein the computing device cluster comprises at least one computing device, and each computing device comprises a processor and a memory, wherein
the memory is configured to store instructions; and
the processor is configured to enable, according to the instructions, the computing device cluster to perform the method according to any one of claims 1 to 10.

22. A computer storage medium, wherein the computer storage medium stores one or more instructions, and when the instructions are executed by one or more computers, the one or more computers are enabled to implement the method according to any one of claims 1 to 10.

23. A computer program product, wherein the computer program product stores instructions, and when the instructions are executed by a computer, the computer is enabled to implement the method according to any one of claims 1 to 10.
